# EUROPÄISCHE PATENTSCHRIFT

(11) **EP 1 326 809 B1**
(45) Veröffentlichungstag und Bekanntmachung des Hinweises auf die Patenterteilung: **06.09.2006**
(21) Anmeldenummer: 00990633.0
(22) Anmeldetag: 01.12.2000
(51) Int. Cl.: C03C 17/22, C03C 17/34, G02B 1/11

(54) **OPTISCHES SUBSTRAT SOWIE EIN VERAHREN ZUR HERSTELLUNG OPTISCHER SUBSTRATE**
OPTICAL SUBSTRATE AND A METHOD FOR PRODUCING OPTICAL SUBSTRATES
SUBSTRAT OPTIQUE ET PROCEDE DE FABRICATION DE SUBSTRATS OPTIQUES

(30) Priorität: 29.09.2000 EP 00121504
(43) Veröffentlichungstag der Anmeldung: 16.07.2003
(73) Patentinhaber: Schott AG, 55122 Mainz (DE)
(72) Erfinder: BAUER, Stefan, 55286 Wörrstadt (DE); KUHR, Markus, 55597 Wöllstein (DE); VINGERLING, Bram, 35415 Pohlheim-Hausen (DE); Lutz Klippe, Wiesbaden DE 65187 (DE); Burkhard Danielzik, DE 55411 Bingen (DE)
(74) Vertreter: Herden, Andreas F.
(86) Internationale Anmeldenummer: PCT/EP2000/012124
(87) Internationale Veröffentlichungsnummer: WO 2002/026651

(56) Entgegenhaltungen:
- EP-A- 0 416 119
- EP-A- 0 791 562
- EP-A- 0 994 081
- WO-A-00/72053
- WO-A-90/02964
- FR-A- 2 351 423
- US-A- 5 930 046
- J. VAC. SCI. TECHNOL. A, Bd. 1, Nr. 4, 1983, Seiten 1810-1819,
- SURFACE AND COATINGS TECHNOLOGY, Bd. 80, 1996, Seiten 200-202, XP002099295
- V. PAQUET ET AL.: SPIE, Bd. 1125, 1989, Seiten 41-44, XP009044494

## Beschreibung

Die Erfindung betrifft im allgemeinen das Gebiet optischer Substrate sowie Verfahren zu deren Herstellung sowie im speziellen ein optisches Substrat gemäß Anspruch 1, ein Verfahren zur Herstellung optischer Substrate gemäß Anspruch 11.

Mit dem Einzug optischer Signalverarbeitungs- und Übertragungstechniken auf vielen Ebenen, wie beispielsweise bei der Übertragung hoher Datenraten auf interkontinentalen oder Fernvermittlungsstrecken sowie in lokalen und Netzen mit mittleren Reichweiten, entsteht ein stetig wachsender Bedarf an optischen Einrichtungen zur Beeinflussung und Steuerung der Ausbreitung des die Information tragenden Lichtes.

Ein wichtiger Grundbaustein der optischen Signalverarbeitungs- und Übertragungstechnik ist das optische Substrat, welches in der Regel aus einem mit hoher Oberflächengüte bearbeiteten Träger besteht, der selbst auch als Substrat bezeichnet wird und welcher bei seiner Verwendung in Transmission im verwendeten Wellenlängenbereich möglichst wenig Absorption aufweist. Auf einem derartigen Substrat sind meistens ein oder mehrere optische Schichten aufgebracht, welche je nach Anwendungsfall von einfacher Reflexionsminderung mit einigen wenigen Schichten bis hin zu schmalbandigen Filtern mit mehr als hundert Schichten umfassenden Systemen reichen. Zur Vermeidung von Verlusten sollen diese Schichten möglichst geringe Absorption sowie eine hohe Oberflächenqualität mit möglichst wenig Streuzentren bieten.

Zur Herstellung interferenzoptischer Schichten, welche durch Brechungsindexänderungen eine Mehrstrahlinterferenz des reflektierten und/oder transmittierten Lichtes bewirken, ist es bekannt, Sputterverfahren, wie beispielsweise das APS-Verfahren zu verwenden. Nachteilig ist in diesem Verfahren jedoch, dass dabei die Verwendung von Materialien, welche eine vollständige Schmelze bilden, häufig schwierig ist, da ein direktes Verspritzen dieser Materialien im Rezipienten mögliche Aufdampfraten begrenzt. Ferner liegen häufig Spezies, wie beispielsweise Niob, in der aufgetragenen Schicht nicht mehr stöchiometrisch vor, da aufgrund des bei diesem Verfahren nötigen niedrigen Vakuums Reaktionspartner, wie beispielsweise Sauerstoff, nicht in ausreichender Menge zugeführt werden können. Hierdurch werden äußerst zeitaufwendige Nachoxydationsschritte, Temperungen, erforderlich, welche die Kostensituation stark beeinträchtigen. Ohne derartige Nachbearbeitungsschritte machen aber bleibende Absorptionszentren eine Verwendung dieser Substrate häufig unmöglich. Ferner ist bereits die Prozeßgeschwindigkeit des APS-Verfahrens bei optischen Mehrstrahl-Interferenzsubstraten, beispielsweise bei einem DWDM-Substrat so langsam, dass mehr als 16 Stunden vergehen, bis eine Charge verarbeitet ist und deren Qualität überprüfbar wird. Hierdurch gestalten sich Regelungs- und Nachführungsvorgänge zur Optimierung des Verfahrens ebenfalls äußerst zeitaufwendig.

Ein besonders drastischer Nachteil besteht ferner auch in den hohen mechanischen Spannungen, welche durch den Schichtauftrag beim APS-Verfahren in der Oberfläche des Substrates erzeugt werden. Um überhaupt zu wirtschaftlich vernünftigen Ausbeuten zu gelangen, wird die Verwendung von Substraten mit mehr als 10 mm Substratdicke nötig, welche nach dem Aufbringen der Oberflächenbeschichtung rückseitig auf deren spätere Enddicke von 1 bis 2 mm nachbearbeitet werden müssen. Hierdurch wird nicht nur das aufgebrachte Schichtsystem gefährdet sondern werden weitere Störquellen geschaffen, wie beispielsweise unerwünschte Keilwinkel zwischen den Substratoberflächen.

Die nachveröffentlichte PCT-Anmeldung PCT/EP 00/06518 regt zwar an, zum Aufbau interferenzoptischer Schichtsysteme ein Plasma-Induziertes-CVD-Verfahren zu verwenden, jedoch werden keinerlei Angaben zu den verwendbaren Materialien sowie zu den sich hieraus ergebenden mechanischen und hygroskopischen Eigenschaften gemacht.

Ein Ziel der vorliegenden Erfindung ist es folglich, optische Substrate weniger zeitaufwendig zu fertigen können, wobei diese Substrate vorzugsweise deutlich niedrigere Oberflächenverspannungen zeigen sollen. Darüber hinaus ist es wünschenswert, ein Substrat während des gesamten Verfahrensablaufs mit im wesentlichen Endabmessungen bearbeiten zu können, um nachträgliche Schädigungen des Schichtsystems sowie zusätzliche Störquellen von Anfang an auszuschließen. Ferner besteht der Wunsch, Materialien mit hohem Brechungsindex, wie beispielsweise Niob und das zugehörige, in die optische Schicht eingebrachte Nb₂O₅ verwenden zu können, um das Design optischer Schichten sowie die Effektivität der Filterwirkung der optischen Substrate zu unterstützen.

Die Aufgabe wird in überraschend einfacher Weise bereits mit einem optischen Substrat mit den Merkmalen des Anspruchs 1, einem Herstellungsverfahren mit den Merkmalen des Anspruchs 11 gelöst.

Mit großer Überraschung haben die Erfinder festgestellt, dass die Anwesenheit von Halogenatomen oder -verbindungen in den optischen Schichten des Substrates scheinbar zu einer deutlichen Verminderung von Oberflächenspannungen führt. Obwohl bis dato der Einbau von Halogenatomen oder - verbindungen in optische Schichten als stark unerwünscht galt, weil hierdurch derartige Schichten dazu neigen, hygroskopische Eigenschaften zu entwickeln und folglich durch die Einlagerung von Flüssigkeit weniger haltbar werden. Ferner wurde auch angenommen, dass eine derartige Einlagerung von Flüssigkeit, welche insbesondere beim Wasser mit dem Eintrag zusätzlicher Absorptionsbanden einhergeht, bei optischen Substraten sehr nachteilig sein kann.

Die vorliegende Erfindung weist jedoch nach, dass Halogenatome oder -verbindungen, soweit diese unterhalb bestimmter Grenzen bleiben, sehr vorteilhaft sind. Es wird davon ausgegangen, dass während des Auftrags der Schichtung Halogenradikale dafür sorgen, dass eine erhöhte Mobilität der aufzutragenden Spezies an der Substratoberfläche oder an bereits auf das Substrat aufgebrachten Schichten vorliegt, welche dazu führt, dass die abgeschiedene Spezies nach deren Auftreffen auf die Oberfläche sich noch zu einem energetisch günstigen Punkt bewegen kann. Dies bedeutet in Bezug auf die aufzutragende Schicht in einen Bereich migrieren kann, der weniger Spannungen oder Verspannungen in der Oberfläche erzeugt.

Ferner zeigen vergleichbare optische Schichten dann, wenn ein bestimmter Anteil an Halogenatomen oder -verbindungen vorliegt, im Vergleich eine höhere optische Dichte, welches darauf zurückgeführt wird, dass aufgrund der erhöhten Oberflächenmigration verbleibende Freistellen besser mit der aufzutragenden Spezies besetzt werden.

In vorteilhafter Weise beträgt der Anteil der Halogenatome oder des Halogens in der Halogenverbindung in der auf dem Substrat aufgebrachten Schicht nicht mehr als 5 Gewichtsprozent bezogen auf das Material der Schicht und in besonders vorteilhafter Weise liegt dieser Anteil unterhalb von einem Gewichtsprozent. Interferenzschichten die derart auf einem optischen Mehrfach-Interferenzsubstrat aufgebracht wurden, zeigen sehr geringe mechanische Verspannungen und somit nahezu keine spannungsinduzierte Doppelbrechung sowie hohe Homogenität und hohe optische Dichte bei geringer Absorption.

Als sehr vorteilhafte Partner haben sich für die aufzudampfende Spezies Tantal und Niob herausgestellt, welche vorzugsweise in stöchiometrischem oxidischem Verhältnis Nb₂O₅ bzw. Ta₂O₅ a bscheidbar sind.

Im Falle des Niobs war der hohe Brechungsindex sowie die hierdurch erzeugbaren hohen Brechungsindexänderungen in Schichtsystemen von großem Vorteil für das Schichtdesign. Aufgrund der vorstehend beschriebenen Vorteile ließen sich in zügiger Weise sowie bei hoher optischer Qualität optische Mehrfachinterferenz-Substrate als optische Kantenfilter, Bandpaßfilter, Gain-Flattening-Filter und WDM-(Wavelenght-Division-Multiplex)-Filter, insbesondere als DWDM-(Dense-Wavelenght-Division-Multiplex)-Filter realisieren.

Als Verfahren zur Herstellung derartiger optischer Substrate fand ein plasmaunterstütztes PACVD-(Plasma Assisted Chemical Vapor Deposition)-Verfahren Verwendung, welches in einer besonders bevorzugten Ausführungsform ein PECVD-(Plasma Enhaced Chemical Vapor Deposition)-Verfahren und in der am meisten bevorzugten Ausführungsform ein Plasma-Impuls-CVD-Verfahren war, bei welchem Precursorgase mit einer Halogenverbindung Verwendung fanden.

Bevorzugte Verfahrensparameter waren hierbei ein Druck von 0,05 bis 10 mbar, eine Substrattemperatur von etwa 100 bis 600 °C, eine NbCl₅-Konzentration von 0,1 bis 50 % im Precursorgas, eine HMDS-(Hexadimethlydisiloxan)-Konzentration von 0,1 bis 50 % im Precursorgas, eine mittlere Mikrowellenleistung von 0,01 bis 20 kW und ein Gasfluß von 50 bis 10 000 sccm.

Ein besonders bevorzugtes Feld von Verfahrensparametern umfaßte einen Druck von 0,01 bis 1 mbar, eine Substrattemperatur von etwa 150 bis 300 °C, eine NbCl₅₋Konzentration von 0,2 bis 5 % im Precursorgas, eine HMDSO-(Hexadimethlydisiloxan)-Konzentration von 0,25 bis 15 % im Precursorgas, eine mittlere Mikrowellenleistung von 0,1 bis 5 kW und einen Gasfluß von 100 bis 2000 sccm.

Die am meisten bevorzugte Ausführungsform bei der Durchführung des Verfahrens wurde betrieben bei einem Druck von etwa 0,2 mbar +/- 10 %, einer Substrattemperatur von etwa 200 °C +/- 10 %, einer NbCl₅-Konzentration von etwa 2 % +/-10 % im Precursorgas, einer HMDSO-(Hexadimethlydisiloxan)-Konzentration von etwa 3 % +/- 10 % im Precursorgas, einer mittleren Mikrowellenleistung von etwa 0,5 kW +/- 10 % und mit einem Gasfluß von ungefähr 500 sccm +/- 10 %.

Mit den vorstehend beschriebenen Parametersätzen war es möglich, die Prozeßgeschwindigkeit gegenüber dem APS-Verfahren von 16 Stunden auf weniger als 1,5 Stunden beim PICVD-Verfahren abzusenken, so dass eine schnellere Steuerbarkeit und ein hierdurch bewirkter niedrigerer Ausschuß ermöglicht wurde.

Ferner wurde in besonders vorteilhafter Weise die Abscheidung direkt auf Substrate mit im wesentlichen Endformatdicke, vorgenommen. Die einzige Schichtdickenändeung bestand in der Dickenzunahme aufgrund der Abscheidung der optischen Substrate. Diese Substrate hatten bereits den für deren späteren Einsatz erwünschten Keilwinkel und waren im wesentlichen frei von zusätzlichen mechanischen Störungen.

Ein weiterer besonders für die Reproduzierbarkeit des Verfahrens wichtiger Vorteil besteht beim PICVD-Verfahren auch darin, dass durch die Zuführung geeigneter Precursorgase ein Öffnen des Rezipienten während des Herstellungsvorgangs, wie beispielsweise beim APS-Verfahren zur Auffüllung oder Änderung von Target-Materialien entfällt.

Die Erfindung wird nachfolgend detaillierter und unter Bezugnahme auf bevorzugte Ausführungsformen sowie anhand der beigefügten Zeichnungen beschrieben.
Es zeigen:
- Fig. 1: eine schematische Darstellung einer PECVD-Vorrichtung mit deren Hauptbaugruppen,
- Fig. 2: einen schematisch dargestellten Ausschnitt aus dieser Vorrichtung im Bereich des Rezipienten sowie der Mikrowellenerzeuger,
- Fig. 3: eine schematische Seitenansicht des Rezipienten sowie
- Fig. 4: eine schematische Darstellung der räumlichen Ausbildung des Mikrowellenplasmas innerhalb des Rezipienten in einer Frontansicht,
- Fig. 5: eine schematische Querschnittsdarstellung eines optischen Substrats mit einer Vielzahl interferenzoptischer Schichten.

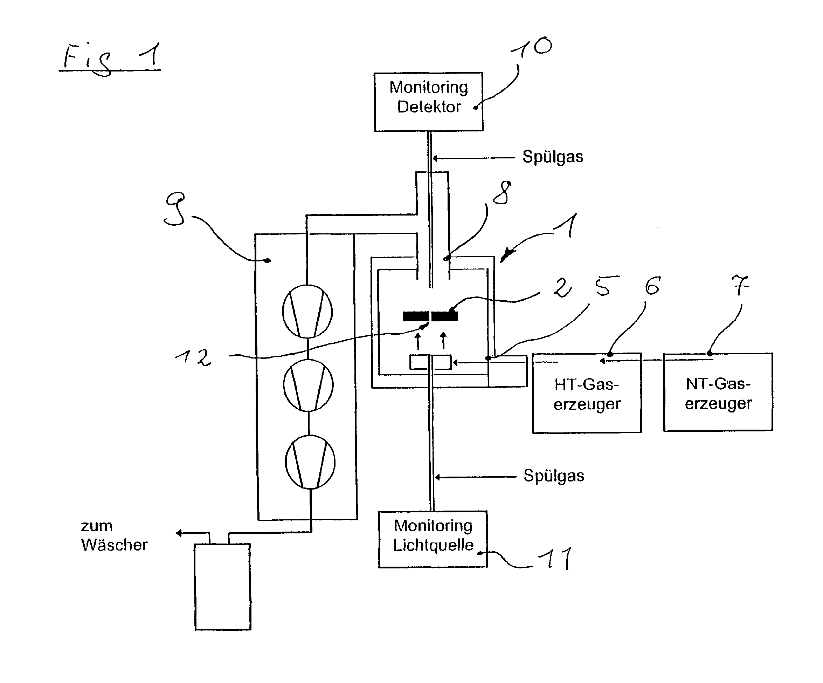

Nachfolgend wird zunächst eine bevorzugte Ausführungsform einer Vorrichtung zum Aufbringen optischer Schichten beschrieben und auf Fig. 1 Bezug genommen, in welcher eine schematische Darstellung der Hauptbaugruppen dieser Vorrichtung gezeigt ist.

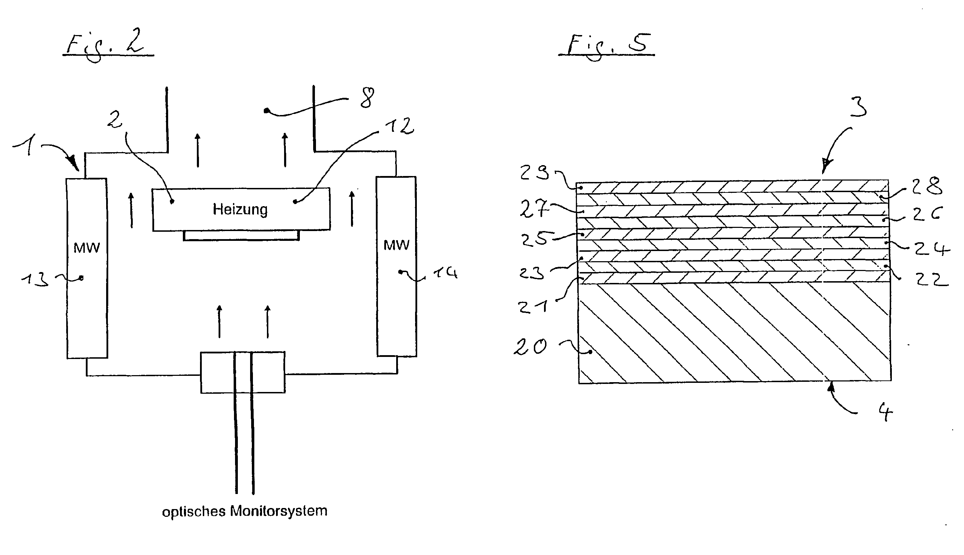

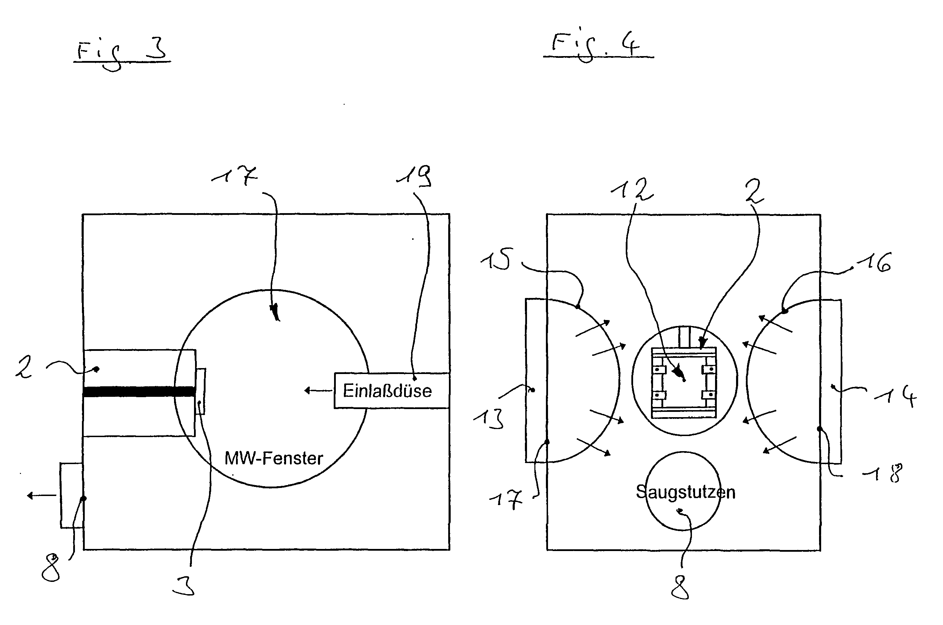

Die Vorrichtung umfaßt einen Rezipienten in Form einer evakuierbaren Kammer 1, in welcher ein Substrathalter 2 angeordnet ist, an dem ein in Fig. 5 detaillierter im Querschnitt dargestelltes optisches Substrat 3 mit dessen Rückseite 4 befestigbar ist.

Über einen Einlaß 5, welcher mit dem zugehörigen Leitungssystem eine Zuführeinrichtung für Prozessgase bildet, ist der Rezipient 1 mit einem Hochtemperatur-(HAT)-Gaserzeuger 6 verbunden, welcher wiederum von einem Niedrigtemperatur-(NT)-Gaserzeuger 7 gespeist wird und derart Prozeß-Vorläufer- oder Precursorgase dem Rezipienten 1 zuführt.

Ferner ist der Rezipient 1 über einen Auslaß 8 und ein Leitungssystem, welche eine Abführeinrichtung für das Abführen von Prozessgasen bilden, mit einem Pumpstand 9 verbunden, der sowohl Vor- als auch Hauptvakuumpumpen umfaßt, um im Rezipienten 1 selbst bei Zuführung von Precursor- oder Spülgasen einen Druck von 0,05 bis 10 mbar stabil und einstellbar aufrecht erhalten zu können.

Der Pumpstand 9 kann mehrere Roots-Pumpen oder andere geeignete Pumpsysteme zur Erzeugung des entsprechenden Vakuums umfassen.

Die aus dem Rezipient 1 abgepumpten Gase werden vom Pumpstand 9 an einen Wäscher weitergeführt, um Umweltbelastungen so gering wie möglich zu halten.

Über Fenster, welche im Gehäuse des Rezipienten 1 druckdicht angeordnet sind, werden ein Monitorring-Detektor 10 sowie eine Monitorring-Lichtquelle 11, welche eine optische Überwachungseinrichtung bilden, mit dem Rezipienten 1 derart verbunden, dass von der Monitorring-Lichtquelle 11 emittiertes Licht durch das optische Substrat 3 sowie eine Öffnung 12 im Substrathalter 2 hindurch tritt und zum Monitorring-Detektor 10 gelangt, welcher bei Verwendung von monochromatischem Licht mit fortschreitendem Schichtwachstum auf dem Substrat 3 Intensitätsänderungen des transmittierten Lichtes erfaßt, und auf diese Weise eine Steuerung des Schichtdickenwachstums ermöglicht.

Nachfolgend wird auf Fig. 2 Bezug genommen, welche einen schematisch dargestellten Ausschnitt aus im Bereich des Rezipienten 1 sowie der Mikrowellenerzeuger zeigt und welcher eine Substratheizung 12 zu entnehmen ist, die entweder Teil des Substrathalters 2 bildet oder an diesem derart angeordnet ist, dass sich hierdurch die Temperatur des Substrats steuern läßt, und vorzugsweise in einem Bereich von etwa 100 bis 600 °C einstellbar auf einen in diesem Intervall liegenden Wert stabilisieren läßt.

Seitlich des Substrathalters 2 sind jeweils Mikrowellenquellen 13, 14 angeordnet, welche jeweils ein eigenes Mikrowellenfeld erzeugt, das teilweise in den Rezipienten 1 hineinragt, wie dies der schematischen Frontansicht aus Fig. 4 mit den das Mikrowellenfeld berandenden Linien 15 und 16 zu entnehmen ist. Diese Linien beschreiben in etwa einen Feldabfall des Mikrowellenfeldes auf einen Wert, unterhalb dessen in Abhängigkeit von den weiteren Verfahrensparametern eine plasmainduzierte Reaktion nicht mehr zu erwarten ist. Um jedoch die Mikrowellenenergie in die evakuierbare Kammer 1 einspeisen zu können, weist diese seitliche, mikrowellendurchlässige Fenster 17, 18 auf. Die schematische Seitenansicht der Fig. 3 zeigt die Lage des linksseitigen Mikrowellenfensters 17 relativ zur Einlaßdüse 19 des Einlaß 5 sowie in Bezug auf den Substrathalter 2 und das optische Substrat 3.

Nachfolgend wird die Herstellung eines optischen Substrats 3 anhand bevorzugter Verfahrensabläufe beschrieben.

Es wird zunächst ein optisches Substrat 4 mit im wesentlichen seiner späteren Verwendungsdicke am Substrathalter 2 befestigt. Das Ausgangssubstrat hat in der Regel einen aus Glas oder Quarzglas bestehenden Grundkörper 20, an welchem die optischen Schichten 21 bis 29 eines optischen Schichtsystems nacheinander aufgetragen werden.

Die zu beschichtende Oberfläche des Substrats hat in bevorzugter Weise Restunebenheiten oder Rauhigkeiten, die bezogen auf deren Rauhtiefe kleiner sind als die Wellenlänge der später verwendeten Strahlung, dies bedeutet vorzugsweise kleiner sind als 1,5 oder 1,0 µm. In besonders bevorzugter Weise sind derartige Rauhtiefen kleiner als 1/10 bzw. 1/20 der verwendeten Wellenlänge und somit kleiner als 0,15 bzw. 0,075 µm. Noch geringere Rauhtiefen sind ebenfalls verwendbar und zeigen Vorteile in Bezug auf das Streuverhalten und die Qualität der aufgetragenen Schichten.

Je nach Schichtdesign haben einander benachbarte Schichten jeweils einen anderen Brechungsindex, um derart zu einer definierten Phasenverschiebung der Wellenfronten sowie einer definierten Reflexion am Brechungsindexübergang zu gelangen.

Nach Befestigung des Substrats 3 am Substrathalter 2 wird der Rezipient abgepumpt und dann mit den Prozeßgasen beschickt. In erfindungsgemäßer Weise werden als Precursorgase Halogenide enthaltende Prozeßgase und vorzugsweise HMDSO, Hexadimethyldisiloxan in einer Konzentration von 0,1 bis 50 %, in bevorzugter Weise von 0,25 bis 15 % und in der am meisten bevorzugten Ausführungsform in einer Konzentration von etwa 3 % +/- 10 % verwendet.

Hierdurch bildet sich in der evakuierbaren Kammer 1 nach Zuführung der Prozeßgase ein durch Mikrowellen zündfähiges Plasma, welches durch die zeitliche Dauer des Mikrowellenfeldes sowie die zugeführte Menge an reagierendem Prozeßgas die jeweilige Menge der Abscheidung auf dem Grundkörper 20 sowie Bildung einer Schicht 21 bis 29 definiert.

Bei einer Verwendung von NbCl₅ als Precursorgas ist eine NbCl₅-Konzentration von 0,1 bis 50 % verwendbar, jedoch wird eine Konzentration von 0,2 bis 5 % bevorzugt und eine Konzentration von 2 % +/- 10 % am meisten bevorzugt.

Die in die evakuierbare Kammer 1 eingestrahlte Mikrowellenleistung hat eine verwenbare mittlere Leistung von 0,01 bis 20 kW und in einer bevorzugten Ausführungsform 0,1 bis 5 kW jedoch bei der am meisten bevorzugten Ausführungsform eine Mikrowellenleistung von etwa 0,5 kW +/-10 %.

Die Precursorgasflüsse sind in einem Bereich von 50 bis 10000 sccm einstellbar und betragen bei einer bevorzugten Version des Verfahrens 100 bis 2000 sccm jedoch bei der am meisten bevorzugten Ausführungsform 500 sccm +/- 10 %.

Anstelle des Chlors sind im Vorläufergas ferner Fluor, Brom und/oder Jod oder eine Mischung aus diesen Halogenen in entsprechenden Mengenverhältnissen verwendbar.

Hierbei werden die Verfahrensparameter jedoch derart eingestellt, dass der Anteil der Halogenatome oder des Halogens in der Halogenverbindung welche in einer der Schichten 21 bis 29 auf dem Substrat 20 aufgebracht wird, nicht mehr als 5 Gewichtsprozent und bei einer besonders bevorzugten Ausführungsform nicht mehr als 1 Gewichtsprozent beträgt.

Anstelle des Niobs ist auch Tantal verwendbar. Darüber hinaus ist für verschiedene Schichten auch jeweils für eine erste Schicht Niob und für eine zweite Schicht Tantal je nach entsprechendem Schichtdesign verwendbar, so dass in diesen Schichten jeweils Nioboxyd Nb₂O₅ und Tantalloxyd Ta₂O₅ in vorzugsweise stöchiometrischem Verhältnis mit relativ geringer Absorption und geringer Anzahl an Streuzentren bildet.

Durch geeignete Wahl des Schichtdesigns der Schichten 21 bis 29, deren Anzahl in Fig. 5 lediglich beispielhaft mit 9 Schichten angegeben wurde, können als optische Substrate Kantenfilter, Bandpaßfilter, Gain-Flattening-Filter und WDM-(Wavelenght Division Multiplex)-Filter und insbesondere DWDM-(Dense Wavelenght Division Multiplex)-Filter mit hoher optischer Güte hergestellt werden.

Obwohl die Erfindung anhand eines plasmainduzierten CVD-Verfahrens beschrieben wurde, ist diese darauf nicht beschränkt und kann vorteilhaft mit plasmaunterstützen PACVD-(Plasma Assisted Chemical Vapor Deposition)-Verfahren sowie PECVD-(Plasma Enhaced Chemical Vapor Deposition)-Verfahren durchgeführt werden.

Ferner wird angenommen, dass der als vorteilhaft erkannte Einbau von Halogenatomen oder Halogenverbindungen nicht auf die dargestellten chemischen Abscheidungsverfahren beschränkt sondern auch in anderen Auftragsverfahren feststellbar ist.

## Patentansprüche

1. Optisches Mehrfach-Interferenzsubstrat umfassend
ein Substrat, an welchem eine oder mehrere Schichten angeordnet sind, durch welche die Ausbreitung von Licht beeinflußt wird, **dadurch gekennzeichnet, daß**
zumindest eine der Interferenzschichten, durch welche die Phasenfrontgeschwindigkeit des durch die Interferenzschicht tretenden Lichtes beeinflußt wird, Halogenatome oder eine Halogenverbindung und eine Niob oder Tantal enthaltende Verbindung umfaßt.

2. Optisches Mehrfach-Interferenzsubstrat gemäß Anspruch 1,
wobei der Anteil der Halogenatome oder des Halogens in der Halogenverbindung in der auf dem Substrat aufgebrachten Schicht nicht mehr als 1 Gewichtsprozent bezogen auf das Material der Schicht beträgt.

3. Optisches Substrat nach Anspruch 1, **dadurch gekennzeichnet, daß** die Halogenatome oder die Halogenverbindung Halogene umfassen, welche jeweils aus der Gruppe ausgewählt sind, die Chlor, Fluor, Brom und Jod und die Mischungen von Chlor, Fluor, Brom und Jod enthält.

4. Optisches Substrat nach einem der vorstehenden Ansprüche, **dadurch gekennzeichnet, daß** die Niob enthaltende Verbindung Nioboxid, vorzugsweise Nb₂O₅, ist, welches in einer Interferenzschicht angeordnet ist, durch welche die Phasenfrontgeschwindigkeit des durch die Interferenzschicht tretenden Lichtes beeinflußt wird.

5. Optisches Substrat nach einem der vorstehenden Ansprüche, **dadurch gekennzeichnet, daß** die Tantal enthaltende Verbindung Tantaloxid, vorzugsweise Ta₂O₅, ist, welches in einer Interferenzschicht angeordnet ist, durch welche die Phasenfrontgeschwindigkeit des durch die Interferenzschicht tretenden Lichtes beeinflußt wird.

6. optisches Substrat nach einem der vorstehenden Ansprüche, **dadurch gekennzeichnet, daß** auf dem Substrat mehrere Schichten angeordnet sind, welche jeweils einen gegenüber zumindest einer benachbarten Schicht anderen Brechungsindex aufweisen.

7. Optisches Substrat nach Anspruch 6, **dadurch gekennzeichnet, daß** das optische Substrat ein Mehrfachinterferenzfilter ist, welches als Kantenfilter für hindurchtretendes und/oder reflektiertes Licht wirkt.

8. Optisches Substrat nach Anspruch 7, **dadurch gekennzeichnet, daß** das optische Substrat ein Mehrfachinterferenzfilter ist, welches als Bandpaßfilter für hindurchtretendes oder reflektiertes Licht wirkt.

9. Optisches Substrat nach Anspruch 7, **dadurch gekennzeichnet, daß** das optische Substrat ein Mehrfachinterferenzfilter ist, welches als Gain-Flattening-Filter wirkt

10. Optisches Substrat nach einem der vorstehenden Ansprüche, **dadurch gekennzeichnet, daß** das optische Substrat ein WDM-(Wavelenght-Division-Multiplex)-Filter, insbesondere ein DWDM-(Dense-Wavelenght-Division-Multiplex)-Filter ist.

11. Verfahren zur Herstellung optischer Mehrfachinterferenz-Substrate umfassend das Aufbringen einer Interferenz-schicht auf einem Substrat, **dadurch gekennzeichnet, daß** die Schicht Halogenatome oder eine Halogenverbindung und eine Niob oder
Tantal enthaltenden Verbindung umfaßt und mittels PACVD (Plasma Assisted Chemical Vapor Deposition) abgeschieden wird.

12. Verfahren gemäß Anspruch 11, **dadurch gekennzeichnet, daß**
wobei der Anteil der Halogenatome oder des Halogens in der Halogenverbindung, welche in der Schicht auf dem Substrat aufgebracht werden bezogen auf das Material der Schicht nicht mehr als 1 Gewichtsprozent beträgt.

13. Verfahren zur Herstellung eines optischen Substrats nach Anspruch 11 oder 12, **dadurch gekennzeichnet, daß** die Halogenatome oder die Halogenverbindung Halogene umfassen, welche aus der Gruppe ausgewählt sind, die Chlor, Fluor, Brom und Jod enthält.

14. Verfahren zur Herstellung eines optischen Substrats nach einem der vorstehenden Ansprüche, **dadurch gekennzeichnet, daß** die Niob enthaltende Verbindung Nioboxid, vorzugsweise Nb₂O₅, ist, welches in einer Interferenzschicht angeordnet wird, durch welche die Phasenfrontgeschwindigkeit des durch die Interferenzschicht tretenden Lichtes beeinflußt wird.

15. Verfahren zur Herstellung eines optischen Substrats nach einem der vorstehenden Ansprüche, **dadurch gekennzeichnet, daß** die Tantal enthaltende Verbindung Tantaloxid, vorzugsweise Ta₂O₅, ist, welches in einer Interferenzschicht angeordnet wird, durch welche die Phasenfrontgeschwindigkeit des durch die Interferenzschicht tretenden Lichtes beeinflußt wird.

16. Verfahren zur Herstellung eines optischen Substrats nach einem der Ansprüche von 11 bis 15, **dadurch gekennzeichnet, daß** auf dem Substrat mehrere Schichten angeordnet werden, welche jeweils einen gegenüber zumindest einer benachbarten Schicht geänderten Brechungsindex aufweisen.

17. Verfahren nach einem der Ansprüche von 11 bis 16, **dadurch gekennzeichnet, daß** das Verfahren ein PECVD-(Plasma Enhaced Chemical Vapor Deposition)-Verfahren, insbesondere ein Plasma-Impuls-CVD-Verfahren ist, bei welchem Precursorgase mit einer Halogenverbindung verwendet werden.

18. Verfahren nach einem der vorstehenden Ansprüche, **dadurch gekennzeichnet, daß** das Verfahren bei einem Druck von0,05 bis 10 mbar, einer Substrattemperatur von etwa 100 bis 600 °C, einer NbCl₅-Konzentration von 0,1 bis 50 % im Precursorgas, einer HMDS-(Hexadimethlydisiloxan)-Konzentration von 0,1 bis 50 % im Precursorgas, einer mittleren Mikrowellenleistung von 0,01 bis 20 kW und mit einem Gasfluß von 50 bis 10 000 sccm durchgeführt wird.

19. Verfahren nach einem der vorstehenden Ansprüche, **dadurch gekennzeichnet, daß** das Verfahren bei einem Druck von0,01 bis 1 mbar, einer Substrattemperatur von etwa 150 bis 300 °C, einer NbCl₅₋Konzentration von 0,2 bis 5 % im Precursorgas, einer HMDSO-(Hexadimethlydisiloxan)-Konzentration von 0,25 bis 15 % im Precursorgas, einer mittleren Mikrowellenleistung von 0,1 bis 5 kW und mit einem Gasfluß von 100 bis 2 000 sccm durchgeführt wird.

20. Verfahren nach einem der vorstehenden Ansprüche, **dadurch gekennzeichnet, daß** das Verfahren bei einem Druck von etwa 0,2 mbar +/- 10 %, einer Substrattemperatur von etwa 200 °C +/- 10 %, einer NbCl₅-Konzentration von etwa 2 % +/- 10 % im Precursorgas, einer HMDSO-(Hexadimethlydisiloxan)-Konzentration von etwa 3 % +/- 10 % im Precursorgas, einer mittleren Mikrowellenleistung von etwa 0,5 kW +/- 10 % und mit einem Gasfluß von ungefähr 500 sccm +/- 10 % durchgeführt wird.

## Claims

1. Optical multilayer interference substrate, comprising a substrate on which one or more layers are arranged through which the diffusion of light is influenced, **characterised in that** at least one of the interference layers through which the phase front velocity of the light passing through the interference layer is influenced comprises halogen atoms or a halogen compound and a compound containing niobium or tantalum.

2. Optical multilayer interference substrate according to claim 1, wherein the proportion of the halogen atoms or the halogen in the halogen compound in the layer applied to the substrate is not more than 1 per cent by weight in relation to the material of the layer.

3. Optical substrate according to claim 1, **characterised in that** the halogen atoms or the halogen compounds comprise halogens which are selected respectively from the group which contains chlorine, fluorine, bromine and iodine and the compounds of chlorine, fluorine, bromine and iodine.

4. Optical substrate according to one of the preceding claims, **characterised in that** the niobium-containing compound is niobium oxide, preferably Nb₂O₅, which is arranged in an interference layer, through which the phase front velocity of the light passing through the interference layer is influenced.

5. Optical substrate according to one of the preceding claims, **characterised in that** the tantalum-containing compound is tantalum oxide, preferably Ta₂O₅, which is arranged in an interference layer, through which the phase front velocity of the light passing through the interference layer is influenced.

6. Optical substrate according to one of the preceding claims, **characterised in that** a plurality of layers are arranged on the substrate which respectively have a different refractive index with respect to at least one adjacent layer.

7. Optical substrate according to claim 6, **characterised in that** the optical substrate is a multilayer interference filter which works as an edge filter for passing and / or reflected light.

8. Optical substrate according to claim 7, **characterised in that** the optical substrate is a multilayer interference filter which works as a band pass filter for passing or reflected light.

9. Optical substrate according to claim 7, **characterised in that** the optical substrate is a multilayer interference filter which works as a gain flattening filter.

10. Optical substrate according to one of the preceding claims, **characterised in that** the optical substrate is a WDM (Wavelength Division Multiplex) filter, in particular a DWDM (Dense Wavelength Division Multiplex).

11. Method for producing optical multilayer interference substrates, comprising the application of an interference layer on a substrate, **characterised in that** the layer comprises halogen atoms or a halogen compound and a compound containing niobium or tantalum and is separated by means of PACVD (Plasma Assisted Chemical Vapour Deposition).

12. Method according to claim 11, **characterised in that** the proportion of the halogen atoms or the halogen in the halogen compound which is applied in the layer to the substrate amounts to no more than 1 per cent by weight in relation to the material of the layer.

13. Method for producing an optical substrate according to claim 11 or 12, **characterised in that** the halogen atoms or the halogen compound comprise halogens which are selected from the group which contains chlorine, fluorine, bromine and iodine.

14. Method for producing an optical substrate according to one of the preceding claims, **characterised in that** the niobium-containing compound is niobium oxide, preferably Nb₂O₅, which is arranged in an interference layer, through which the phase front velocity of the light passing through the interference layer is influenced.

15. Method for producing an optical substrate according to one of the preceding claims, **characterised in that** the tantalum-containing compound is tantalum oxide, preferably Ta₂O₅, which is arranged in an interference layer, through which the phase front velocity of the light passing through the interference layer is influenced.

16. Method for producing an optical substrate according to one of the claims 11 to 15, **characterised in that** a plurality of layers are arranged on the substrate which respectively have a different diffractive index with respect to at least one adjacent layer.

17. Method according to one of the claims 11 to 16, **characterised in that** the method is a PECVD (Plasma Enhanced Chemical Vapour Deposition) method, particularly a Plasma Pulse CVD method, wherein precursor gases are used with a halogen compound.

18. Method according to one of the preceding claims, **characterised in that** the method is carried out at a pressure of 0.05 to 10 mbar, a substrate temperature of around 100 to 600°C, a NbCl₅ concentration of 0.1 to 50% in the precursor gas, a HMDS (hexadimethyl disiloxane) concentration of 0.1 to 50% in the precursor gas, an average microwave power of 0.01 to 20 kW and with a gas flux of 50 to 10,000 sccm.

19. Method according to one of the preceding claims, **characterised in that** the method is carried out at a pressure of 0.01 to 1 mbar, a substrate temperature of around 150 to 300°C, a NbCl₅ concentration of 0.2 to 5% in the precursor gas, a HMDSO (hexadimethyl disiloxane) concentration of 0.25 to 15% in the precursor gas, an average microwave power of 0.1 to 5 kW and with a gas flux of 100 to 2000 sccm.

20. Method according to one of the preceding claims, **characterised in that** the method is carried out at a pressure of around 0.2 mbar +/- 10%, a substrate temperature of around 200°C +/- 10%, a NbCl₅ concentration of around 2% +/- 10% in the precursor gas, a HMDSO (hexadimethyl disiloxane) concentration of around 3% +/-10% in the precursor gas, an average microwave power of around 0.5 kW +/- 10% and with a gas flux of around 500 sccm +/- 10%.

## Revendications

1. Substrat optique interférentiel multiple, comprenant
un substrat sur lequel sont disposées une ou plusieurs couches par lesquelles la propagation de la lumière est influencée, **caractérisé en ce qu'**au moins l'une des couches interférentielles par lesquelles la vitesse du front de phase de la lumière traversant la couche interférentielle est influencée comprend des atomes d'halogène ou un composé halogéné et un composé contenant du niobium ou du tantale.

2. Substrat optique interférentiel multiple suivant la revendication 1,
dans lequel la proportion d'atomes d'halogène ou la proportion d'halogène dans le composé halogéné que contient la couche appliquée sur le substrat ne s'élève pas à plus de 1 % en poids par rapport à la matière constituant la couche.

3. Substrat optique suivant la revendication 1, **caractérisé en ce que** les atomes d'halogène ou le composé halogéné comprennent des halogènes qui sont choisis dans le groupe qui comprend le chlore, le fluor, le brome et l'iode ou les mélanges de chlore, de fluor, de brome et d'iode.

4. Substrat optique suivant l'une des revendications précédentes, **caractérisé en ce que** le composé contenant du niobium est un oxyde de niobium, avantageusement Nb₂O₅, qui est disposé dans une couche interférentielle par laquelle la vitesse du front de phase de la lumière traversant la couche interférentielle est influencée.

5. Substrat optique suivant l'une des revendications précédentes, **caractérisé en ce que** le composé contenant du tantale est un oxyde de tantale, avantageusement Ta₂O₅, qui est disposé dans une couche interférentielle par laquelle la vitesse du front de phase de la lumière traversant la couche interférentielle est influencée.

6. Substrat optique suivant l'une des revendications précédentes, **caractérisé en ce que** plusieurs couches ayant chacune un indice de réfraction qui diffère de celui d'au moins une couche voisine sont disposées sur le substrat.

7. Substrat optique suivant la revendication 6, **caractérisé en ce qu'**il est un filtre interférentiel multiple qui agit comme un filtre à arêtes pour la lumière transmise et/ou la lumière réfléchie.

8. Substrat optique suivant la revendication 7, **caractérisé en ce qu'**il est un filtre interférentiel multiple qui agit comme filtre passe-bande pour la lumière transmise et/ou la lumière réfléchie.

9. Substrat optique suivant la revendication 7, **caractérisé en ce qu'**il est un filtre interférentiel multiple qui agit comme filtre Gain-Flattening.

10. Substrat optique suivant l'une des revendications précédentes, **caractérisé en ce qu'**il est un filtre WDM (Wavelength-Division-Multiplex), en particulier un filtre DWDM (Dense-Wavelength-Division-Multiplex).

11. Procédé de fabrication de substrats optiques interférentiels multiples, comprenant l'application d'une couche interférentielle sur un substrat, **caractérisé en ce que** la couche comprend des atomes d'halogène ou un composé halogéné et un composé contenant du niobium ou du tantale et elle est déposée par PACVD (Plasma Assited Chemical Vapor Deposition).

12. Procédé suivant la revendication 11, **caractérisé en ce que**
la proportion des atomes d'halogène ou de l'halogène présent dans le composé halogéné, qui sont appliqués dans la couche portée par le substrat ne s'élève pas à plus de 1 % en poids par rapport à la matière constituant la couche.

13. Procédé de fabrication d'un substrat optique suivant la revendication 11 ou 12, **caractérisé en ce que** les atomes d'halogène ou le composé halogéné comprennent des halogènes qui sont choisis dans le groupe comprenant le chlore, le fluor, le brome et l'iode.

14. Procédé de fabrication d'un substrat optique suivant l'une des revendications précédentes, **caractérisé en ce que** le composé contenant du niobium est un oxyde de niobium, avantageusement Nb₂O₅, qui est disposé dans une couche interférentielle par laquelle la vitesse du front de phase de la lumière traversant la couche interférentielle est influencée.

15. Procédé de fabrication d'un substrat optique suivant l'une des revendications précédentes, **caractérisé en ce que** le composé contenant du tantale est un oxyde de tantale, avantageusement Ta₂O₅, qui est disposé dans une couche interférentielle par laquelle la vitesse du front de phase de la lumière traversant la couche interférentielle est influencée.

16. Procédé de fabrication d'un substrat optique suivant l'une des revendications 11 à 15, **caractérisé en ce que** plusieurs couches qui ont chacune un indice de réfraction modifié par rapport à au moins une couche voisine sont disposées sur le substrat.

17. Procédé suivant l'une des revendications 11 à 16, **caractérisé en ce qu'**il est un procédé PECVD (Plasma Enhanced Chemical Vapor Deposition), en particulier un procédé Plasma-Impuls-CVD, dans lequel sont utilisés des gaz précurseurs avec un composé halogéné.

18. Procédé suivant l'une des revendications précédentes, **caractérisé en ce qu'**il est mis en oeuvre à une pression de 0,05 à 10 mbar, à une température de substrat d'environ 100 à 600°C, à une concentration en NbCl₅ de 0,1 à 50 % dans le gaz précurseur, à une concentration en HMDSO (hexadiméthyldisiloxane) de 0,1 à 50 % dans le gaz précurseur, à une puissance moyenne de micro-ondes de 0,01 à 20 kW et avec un flux de gaz de 50 à 10 000 sccm.

19. Procédé suivant l'une des revendications précédentes, **caractérisé en ce qu'**il est mis en oeuvre à une pression de 0,01 à 1 mbar, à une température du substrat d'environ 150 à 300°C, à une concentration en NbCl₅ de 0,2 à 5 % dans le gaz précurseur, à une concentration en HMDSO (hexadiméthyldisiloxane) de 0,25 à 15 % dans le gaz précurseur, à une puissance moyenne de micro-ondes de 0,1 à 5 kW et avec un flux de gaz de 100 à 2000 sccm.

20. Procédé suivant l'une des revendications précédentes, **caractérisé en ce qu'**il est mis en oeuvre à une pression de 0,2 mbar +/- 10 %, à une température de substrat d'environ 200°C +/- 10 %, à une concentration en NbCl₅ d'environ 2 % +/-10 % dans le gaz précurseur, à une concentration en HMDSO (hexadiméthyldisiloxane) d'environ 3 % +/- 10 % dans le gaz précurseur, à une puissance moyenne de micro-ondes d'environ 0,5 kW +/- 10 % et avec un flux de gaz d'environ 500 sccm +/- 10 %.
